# EUROPEAN PATENT APPLICATION

(11) **EP 4 703 610 A1**
(43) Date of publication of application: **04.03.2026**
(21) Application number: 24196517.7
(22) Date of filing: 26.08.2024
(51) Int. Cl.: F16K 1/36, F16K 1/46, F16K 3/24, F16K 3/26

(54) **A VALVE AND A METHOD FOR INSTALLING A SEALING ASSEMBLY**

(71) Applicant: Valmet Flow Control Oy, 01380 Vantaa (FI)
(72) Inventor: Kim, Eungbok, 01380 Vantaa (FI); Lee, Sangho, 01380 Vantaa (FI)
(74) Representative: Kolster Oy Ab

(57) **Abstract**

The invention relates to a valve, comprising: a valve body with a first port and a second port, a first end of a stem protruding out of the valve, a cage is provided to the valve body to provide a flow path between the first port and the second port, and a valve plug (8) which is movable with the stem (6). The vale further comprises a metal seal ring (15) and a restriction (26). To valve for challenging conditions, the valve comprises a first seal cover (16) which extends along an outer wall (19) of the valve plug (8) and has a section (20) protruding towards an inner wall (17) of the the cage (7). The metal seal ring (15) and a first plug seal ring (18) are both arranged between the first seal cover (16) and the inner wall (17) of the cage (7), but on opposite sides of the protruding section (20), whereby the first plug seal ring (18) is located closer to the outer end of the stem (6).

## Description

### BACKGROUND OF THE INVENTION

### FIELD OF THE INVENTION

This invention relates to a valve and to a method for installing a sealing assembly.

### DESCRIPTION OF PRIOR ART

Previously it is known to utilize metal sealing rings in valves having a valve plug attached to a stem for being movable with the stem in a longitudinal direction of the stem within a cage. Such valves are typically intended to meet requirements for high pressure and high temperature. A challenge with the use of metal seals is, however, that during use a counter sealing surface of the metal seal within the cage may be damaged due to wear over time. To reduce the damage to the counter sealing surface, the metal ring is typically compressed by a diagonal counter surface on the inner wall of the cage, but alignment of the plug is important to meet leakage requirements.

A drawback with the known valves where the sealing is implemented with a metal seal is therefore that the leakage performance may be good immediately after assembly, but over time the leakage performance may be decreased due to wear or heating/cooling during operation, for instance.

A need, however, exists for a solution which improves the leakage performance also over time.

### SUMMARY OF THE INVENTION

An object of the present invention is to solve the above-mentioned drawback and to provide solution which results in a valve which can be reliably used for a long time period and in challenging conditions. This object is achieved with a valve according to independent claim 1 and a method according to independent claim 13.

When a first seal cover is used in combination with a metal seal ring and a first plug seal ring, such that both seal rings are arranged in a space between the first seal cover and the inner wall of the cage, it becomes possible to efficiently guide the metal seal ring in an optimal way in relation to the inner wall of the cage and irrespective of any misalignment of the plug, which ensures good leakage performance over a long period of use.

Preferred embodiments of the invention are disclosed in the dependent claims.

### BRIEF DESCRIPTION OF DRAWINGS

In the following the valve and the method for installing a sealing assembly to a valve will be described in closer detail by way of example and with reference to the attached drawings, in which
Figure 1 illustrates a valve,
Figure 2 illustrates a first embodiment of a sealing assembly for the valve in Figure 1,
Figure 3 illustrates a second embodiment of a sealing assembly,
Figure 4 illustrates a third embodiment of a sealing assembly. and
Figure 5 illustrates a fourth embodiment of a sealing assembly.

### DESCRIPTION OF AT LEAST ONE EMBODIMENT

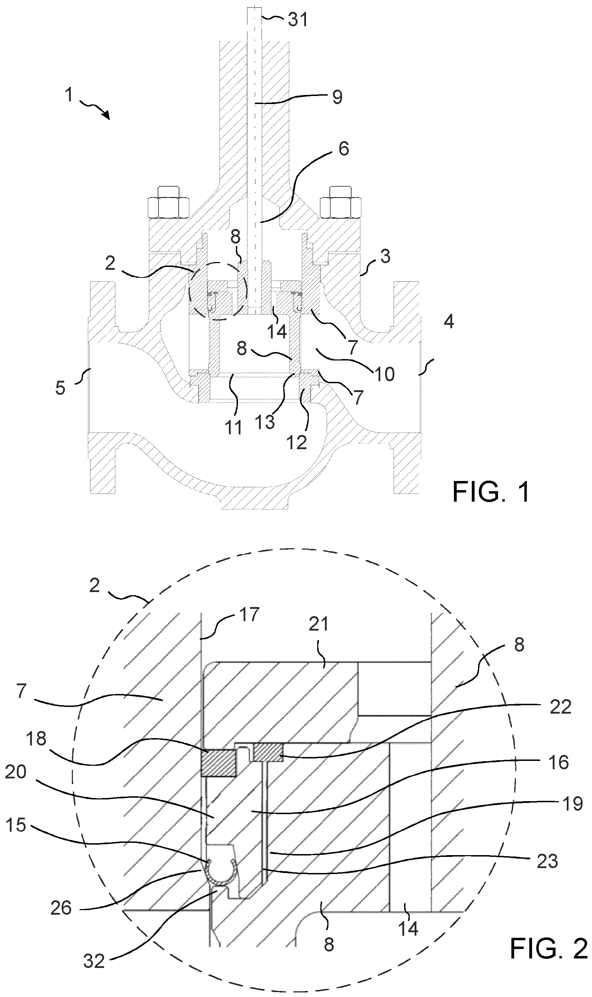

Figure 1 illustrates a valve in cross section. The valve 1 comprises a valve body 3 with a first port 4 and a second port 5. A cage 7 is provided to the valve body 1 to provide a flow path between the first port 4 and the second port 5.

A valve plug 8 is attached to a stem 6, which has an outer end 31 that protrudes out of the valve 1. An upper part of the stem is in traditional way sealed to the valve 1 by a packing, which is not illustrated in the figures. The valve plug 8 is movable with the stem 6 in a longitudinal direction 9 of the stem within the cage 7 between a fully open position, allowing free flow of fluid between the first port 4 and the second port 5, and a fully closed position preventing fluid flow between the first port 4 and the second port 5. Consequently, the valve 1 illustrated by way of example is a globe valve where the valve plug 8 moves with a linear movement between the open and closed position.

In Figure 1 the valve plug 8 and the stem 6 are in the lowermost position, where the illustrated valve 1 is closed and a fluid flow between the first port 4 and the second port 5 is prevented. Once an actuator is utilized to lift the stem 6 and the valve plug 8 to an uppermost position in Figure 1, the valve 1 is fully open to allow free fluid flow between the first port 4 and the second port 5.

The illustrated valve 1 can be utilized for controlling fluid flows in both directions, though this is not necessarily the case for all valves for which the invention can be utilized. Consequently, when the first port 4 functions as an inlet receiving a fluid flow in the illustrated valve 1, the second port 5 functions as an outlet passing on the fluid flow. Similarly, when the second port 5 functions as an inlet receiving a fluid flow, the first port 4 functions as an outlet passing on the fluid flow. The later described sealing solution works efficiently in both flow directions.

In the example of Figure 1 the valve 1 is provided with a cage 7 which is generally shaped as a cylinder having a first opening 10 in a cylindrical side wall. This first opening 10 allows fluid flow between the first port 4 and the inner part of the cage 7, unless the first opening is blocked by the valve plug 8, as in the illustrated situation. A second opening 11 is provided in an end of the generally cylindrical cage 7. In Figure 1 this second opening 11 is in the lower end of the cage 7 where the second opening 11 allows fluid flow between the inner part of the cage 7 and the second port 5.

A seat ring 12 is provided to the second opening 11 of the cage 7 to fluid tightly receive an end 13 of the valve plug 8 which is opposite to an end of the valve plug to which the stem 6 is connected. In the illustrated example the stem is connected to the upper end of the valve plug 8, while the lower end 13 of the valve plug 8, which has a generally cylindrical shape, is tightly received by the seat ring 12 when the valve 1 is closed. In many implementations an end 13 of a valve plug 8 of steel may be directly and fluid tightly received by a seat ring 12 of steel without any need for a seal ring of other material at this location. However, if needed, in some implementations a seal ring of another material than steel may be fitted here between.

In Figure 1 the valve plug 8 is provided with at least one balancing opening 14 through the valve plug 8, to provide a pressure balancing between different parts of the cage 7 that are separated from each other by the valve plug 8. In praxis, the interior of the cage 7 located above the valve plug 8 in Figure 1 would be separated from the interior of the cage 7 located below the valve plug 8 unless the balancing opening would be provided. This balancing opening 14 allows free fluid flow and ensures that the fluid pressure in the interior of the cage above and below the valve plug remains the same 8. This ensures that when the flow direction is from the second port 5 to the first port 4 and the valve is closed, the fluid pressure from below into the cage does not create a huge force trying to move the valve plug 8 upwards in the illustrated example. In this way a less powerful actuator may be in use to move the stem 6 and the valve plug 8 when flow control is implemented.

Figure 2 illustrates in an enlarged view the sealing assembly 2 which in Figure 1 has been encircled with dotted lines.

During the method for installing the sealing assembly to the valve 1, the valve plug 8 is initially arranged into the valve cage 7. After that a metal seal ring 15 is arranged to surround the valve plug 8. In the illustrated example the metal seal ring 15 is arranged on a protruding edge 32 provided to the valve plug, though such an edge is not necessary in all implementations, as it is alternatively possible to provide a flat surface without an edge under the metal sealing ring 15. A first seal cover 16 is arranged in a gap between the metal seal ring 15 and the valve plug 8 to extend along an outer wall 19 of the valve plug 8. The first seal cover is dimensioned so that a gap 23 is provided between the first seal cover and the outer wall of the plug. The first seal cover 16 surrounds the valve plug 8, is located partially inside of the metal seal ring 15 and covers at least partially the metal seal ring 15. Due to this, the metal seal ring 15 is located between the first seal cover 16 and an inner wall 17 of the cage 7.

A first plug seal ring 18 is arranged between the first seal cover 16 and the inner wall 17 of the cage 7. Due to this, both the metal seal ring 15 and the first plug seal ring 18 are arranged between the first seal cover 16 and the inner wall 17 of the cage 7. However, the first seal cover 16 has a section 20 protruding towards the inner wall 17 of the cage 7. This protruding section 20 separates the metal seal ring 15 from the first plug seal ring 18, as these seal rings are located on opposite sides of this protruding section 20. In the example of Figure 2, the first plug seal ring 18 is located in a recessed section above the protruding section 20 and closer to the outer end 31 the stem 6 than the metal seal ring 15, which is located in a recessed section below the protruding section 20 in the example of Figure 2.

Finally, a plug cover 21 is attached to the valve plug 8 to cover the valve plug. In praxis, this may be implemented with bolts, for instance. An advantage in implementing the installation of the sealing assembly in this way is that it makes it easy to ensure that the various parts of the sealing assembly are positioned in exactly the correct positions to ensure that all part than need to be co-axial with each other actually are correctly placed. If not, leakage or early wear of the parts may be the result.

In Figure 2 it is by way of example assumed that the sealing assembly 2 additionally comprises a cover seal ring 22, which in the installation method can be arranged between the valve plug cover 21 and the valve plug 8 before the valve plug cover 21 is installed. Such a cover seal ring is, however, not necessary in all implementations, in case the metal seal ring 15 can be provided in such a way that it can prevent leakage into a gap 23 located between the valve plug 8 and the first seal cover 16. Consequently, if the cover seal ring is provided, it is preferably arranged at a location where it prevents internal leakage of the valve 1 between the valve plug 8 and the first seal cover 16.

From Figure 2 it can be seen that the valve 1 is provided with a tapered sealing surface 26 on an inner wall 17 of the cage 7 to reduce an inner diameter of the cage 7 at a position where the metal seal ring 15 (moving with the valve plug 8) is located when the valve is in the fully closed position. Consequently, when the valve is in the fully closed position as illustrated in Figures 1 and 2, the C shaped (in cross-section) metal seal ring 15 heavily contacts the tapered sealing surface 26 as the inner diameter of the cage 7 is reduced. This ensures as efficient sealing at the metal seal ring 15 as possible. However, as soon as the stem 6 with the valve plug and metal seal 15 is slightly moved upwards to open the valve, the metal seal ring 15 leaves the position of the tapered sealing surface, due to which the contact force between the metal seal ring 15 and inner wall 17 of the cage is reduced.

When the sealing assembly 2 is installed to the valve as described above, the result is the sealing assembly shown in Figure 2. A valve 1 with such a sealing assembly has excellent properties, as it remains leak proof during high fluid pressures, and as it is suitable for use in high temperatures.

By manufacturing the metal seal ring 15 as a C ring of steel with a nickel coating (such as of steel sold with the trademark "INCONEL" available by Special Metals Corporation), for instance, and by manufacturing the first plug seal ring 18 and the cover seal ring 22 (if provided) of a non-metallic material, such as graphite, it becomes possible to obtain a valve capable of efficiently handling pressures over 100 bar at temperatures of about 600 °C. In praxis such a valve meets the requirements set by the ANSI class V standard.

The combination of the metal seal ring 15 with the first plug seal ring 18 and the first seal cover 16 which is in contact with both of them, ensures that the first plug seal 18 efficiently guides the metal seal ring 15 while they move with the valve plug 8 along the inner wall 17 of the cage 7 during use, though the gap 23 allows the first seal cover 16 and the metal seal ring 15 to move in relation to the valve plug 8 in a plane perpendicular to the stem 6 (radial play) during assembly.

In some implementations the first plug seal ring 18 is dimensioned to fit tightly in the space between first seal cover 16 and the inner wall 17 of the cage 7. This can be seen in Figure 2, as there is no gap visible at this location, but instead the first plug seal ring 18 fills the entire space available. Due to this the contact between the first plug seal ring 18 with the inner wall 17 and the first seal cover 16 keeps the first seal cover in the exactly correct position, which helps to control the position of the metal seal ring 15 in relation to the inner wall. Wear due to unnecessary contact between the inner wall 17 and the metal seal can therefore be avoided. By manufacturing the first plug seal ring 18 of a non-metallic material, such as graphite, wear due to contact between the inner wall 17 and the first plug seal ring can also be avoided. Additionally, the first plug seal ring 18 contributes to ensure that no leakage can occur via the space between the inner wall 17 of the cage 7 and the first seal cover 16.

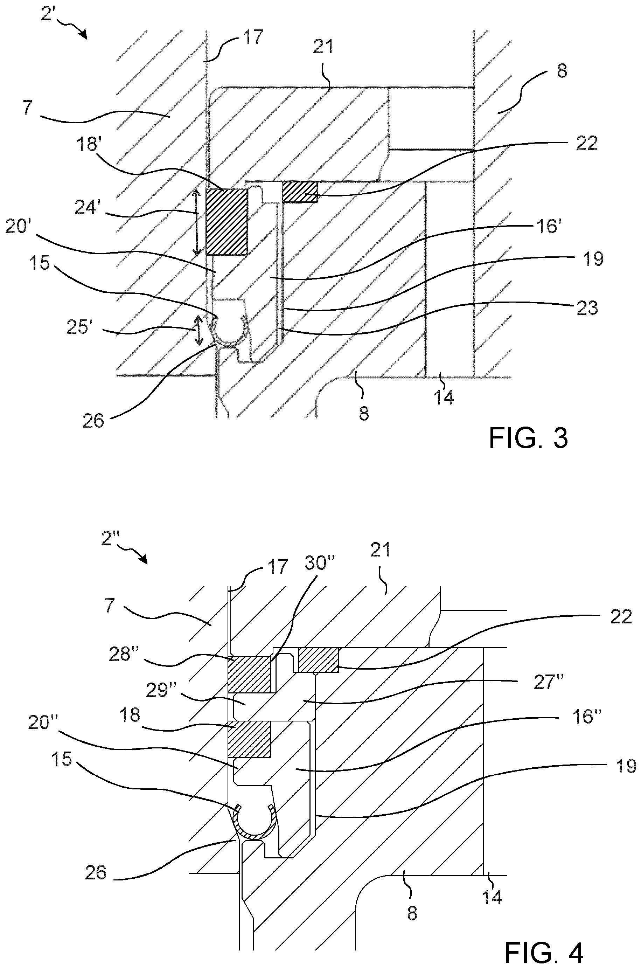

Figure 3 illustrates a second embodiment of a sealing assembly. The sealing assembly 2' of Figure 3 is very similar to the sealing assembly 2 of Figure 2. Therefore, in the following the sealing assembly 2' of Figure 3 will be mainly explained by pointing out the differences between these embodiments.

The sealing assembly 2' of Figure 3 can be utilized in the valve 1 illustrated in Figure 1 instead of the sealing assembly of Figure 2.

A difference between the sealing assembly 2 of Figure 2 and the sealing assembly 2' of Figure 3 is that in Figure 3 the first plug seal ring 18' has a larger height 24' in a longitudinal direction 9 of the stem 6 than the first plug seal ring 18 of Figure 2. In the example illustrated in Figure 3, the height of the first plug seal ring 18' has been dimensioned to be larger than the height 25' of the metal seal ring 15.

An advantage with using a first plug seal ring 18' with a larger height is that the contact between the first plug seal ring 18' and the inner wall 17 of the cage 7 and also between the first plug seal ring 18' and the first seal cover 16' is improved, which makes it possible to control the position of the metal seal ring 15 in relation to the inner wall 17 even more exactly. Additionally, the sealing properties of the first plug seal ring 18' are improved.

From Figure 3 it can be seen, that in order to prepare space for a higher first plug seal ring 18', the shape of the first seal cover 16' has been slightly adjusted as compared to Figure 2. More precisely, in Figure 3 the section 20' of the first seal cover 16' which protrudes towards the inner wall 17 of the cage 7 has a smaller height in the longitudinal direction 9 of the stem 6 as compared to Figure 2.

An additional difference between the embodiment of Figure 3 and the embodiment of Figure 2 is the position of the cover seal ring 22. This is, however, an alternative position, as it is possible to locate this cover seal ring 22 in the same position in the embodiment of Figure 3 as has been illustrated in Figure 2.

In Figure 3 the cover seal ring 22 is located more to the right than in Figure 2, so that it seals the gap between the plug cover 21 and the valve plug 8. However, it is no longer located over the gap 23 between the valve plug 8 and the first seal cover 16'. Such a solution may be implemented also in one of the other embodiments illustrated in Figures 2, 4 and 5.

An advantage with the alternative position of the seal ring 22 as illustrated in Figure 3 is that possible movement of the first seal cover 16' in relation to the valve plug 8, which is facilitated by the gap 23, does not wear out the seal ring 22.

Figure 4 illustrates a third embodiment of a sealing assembly. The sealing assembly 2" of Figure 4 is very similar to the sealing assembly 2 of Figure 2. Therefore, in the following the sealing assembly 2" of Figure 4 will be mainly explained by pointing out the differences between these embodiments.

The sealing assembly 2" of Figure 4 can be utilized in the valve 1 illustrated in Figure 1 instead of the sealing assembly of Figure 2.

A main difference between the sealing assembly 2 of Figure 2 and the sealing assembly 2" of Figure 4 is that in Figure 4 the sealing assembly 2" is provided with a second seal cover 27" and with a second plug seal ring 28".

During the method of installing the sealing assembly 2" to the valve 1, the same steps are implemented as have been described previously in connection with Figure 2. However, before attaching the valve plug cover 21 (and the cover seal 22, if needed), the second seal cover 27" is arranged to surround the valve plug 8 and to cover the first plug seal ring 18. Consequently, the second seal cover 27" will be located closer to the outer end 27 of the stem 6 than the first seal cover 16". In this position the second seal cover 27" extends along the outer wall 19 of the valve plug 8 as an extension to the first seal cover 16". Similarly as the first seal cover 16", also the second seal cover 27" has a section 29" protruding towards the inner wall 17 of the cage 7.

The second plug seal ring 28" is arranged in a space between the second seal cover 27" and the inner wall 17 of the valve cage 7. After this the valve plug cover 21 (and the cover seal 22, if needed) can be attached to the valve plug 8. The second plug seal ring 28" can be of a non-metallic material, such as graphite.

As in the embodiment of Figure 2, the first plug seal ring 18 in combination with the first seal cover 16" has an important task in guiding the metal seal ring 15. Due to this the first plug seal ring 18 is dimensioned to fit tightly in the space between first seal cover 16" and the inner wall 17 of the cage 7. This can be seen in Figure 4, as there is no gap visible at this location, but instead the first plug seal ring 18 fills the entire space available.

However, a loose fit is provided for the second plug seal ring 28. Consequently, when the second plug seal ring 28" at assembly is provided in the space reserved, a gap 30" remains between an inner surface of the second plug seal ring 28" and the second seal cover 27", as is illustrated in Figure 4. This ensures that once the plug cover 21 is attached to the valve plug 8 and tightened with bolts, for instance, there is sufficient room for the second plug seal ring 28" to deform properly.

An advantage with using both the first and second plug seal rings 18" and 28" is that they together ensure that the metal seal ring 15 is properly guided and that leakage along the inner wall 17 in the longitudinal direction 9 of the stem 6 can be prevented. In order to reserve the required additional space for the second plug seal ring 28" and the second seal cover 27", the shape of the first seal cover 16" and the protruding section 20" has been slightly adjusted, as compared to Figure 2.

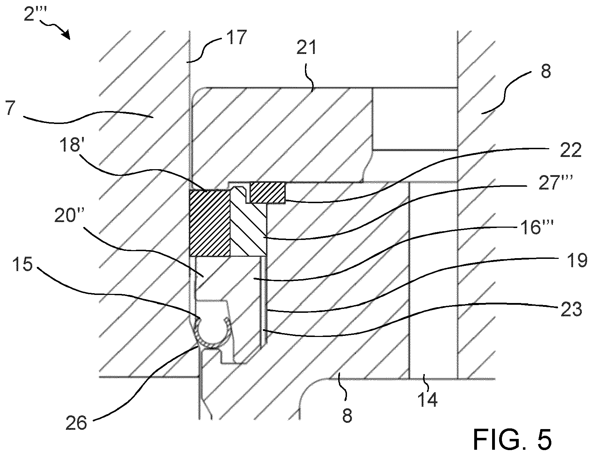

Figure 5 illustrates a fourth embodiment of a sealing assembly. The sealing assembly 2‴ of Figure 5 is very similar to the sealing assemblies illustrated in Figures 2 to 4. Therefore, in the following the sealing assembly 2‴ of Figure 5 will be mainly explained by pointing out the differences between these embodiments.

The sealing assembly 2‴ of Figure 5 can be utilized in the valve 1 illustrated in Figure 1 instead of the sealing assembly of Figure 2.

In Figure 5 the first seal cover 16‴ and the second seal cover 27‴ have a different shape as compared to the previous embodiments. The first seal cover 16‴ still extends along the outer wall 19 of the plug 8 and has a section 20" protruding towards the inner wall 17 of the cage. However, in this example, the first seal cover 16‴ has a flat upper surface extending perpendicular in relation to the outer wall of the plug 19. The first plug seal ring 18' and the second seal cover 27‴ are received on this flat upper surface.

Additionally, as in the embodiment of Figure 3, the height of the first plug seal ring 18' is dimensioned to be larger that the height of the metal seal ring 15.

It is to be understood that the above description and the accompanying figures are only intended to illustrate the present invention. It will be obvious to a person skilled in the art that the invention can be varied and modified without departing from the scope of the invention.

## Claims

1. A valve (1), comprising:
a valve body (3) with a first port (4) and a second port (5),
a stem (6) having an outer end (31) protruding out of the valve,
a cage (7) which is provided to the valve body (1) to provide a flow path between the first port (4) and the second port (5), and
a valve plug (8) which is movable with the stem (6) in a longitudinal direction (9) of the stem within the cage (7) between a fully open position allowing flow of fluid between the first port (4) and the second port (5), and a fully closed position preventing fluid flow between the first port (4) and the second port (5),
a metal seal ring (15) in a space between the valve plug (8) and the cage (7), the metal seal ring being movable with the valve plug (8), and
a tapered sealing surface (26) on an inner wall (17) of the cage (7) to reduce an inner diameter of the cage (7) at a position where the metal seal ring (15) is located when the valve (1) is in the fully closed position, **characterized in that**
the valve comprises a first seal cover (16, 16', 16", 16‴) which extends along an outer wall (19) of the valve plug (8) and has a section (20, 20', 20", 20‴) protruding towards an inner wall (17) of the cage (7),
said metal seal ring (15) and a first plug seal ring (18, 18') are both arranged between the first seal cover (16, 16', 16", 16‴) and the inner wall (17) of the cage (7), but on opposite sides of the protruding section (20, 20', 20", 20‴), and whereby the first plug seal ring (18, 18') is located closer to outer end (31) of the stem (6).

2. The valve according to claim 1, wherein a gap (23) is provided between the first seal cover (16, 16', 16", 16‴) and the outer wall (19) of the valve plug (8) to allow radial play therebetween and alignment of the metal seal ring (15) with respect to the tapered sealing surface (26).

3. The valve according to claim 1 or 2, wherein the first plug seal ring (18, 18') is dimensioned to tightly fit in the space between the first seal cover (16, 16', 16", 16‴) and the inner wall (7) of the cage.

4. The valve according to one of claims 1 to 3, wherein the valve comprises a plug cover (21) attached to the valve plug (8).

5. The valve according to claim 4, wherein a cover seal ring (22) is provided between the plug cover (21) and the valve plug (8).

6. The valve according to one of claims 1 to 5, wherein
the valve comprises a second seal cover (27") located closer to the outer end (31) of the stem (6) than the first seal cover (16"),
the second seal cover extends (27") along the outer wall (19) of the valve plug (8) and has a section (29") protruding towards the inner wall (17) of the cage (7),
a second plug seal ring (28") is arranged in a space between the second seal cover (27") and the inner wall (17) of the cage (7), and between the protruding section (29") of the second seal cover (27") and the plug cover (21).

7. The valve according to claim 6, wherein the second plug seal ring (28") is dimensioned to have a loose fit to provide a gap (30") in the space between the second seal cover (27") and the inner wall of the cage (17).

8. The valve according to one of claims 1 to 7, wherein at least one on the first plug seal ring (18, 18'), the second plug seal ring (28") and the cover seal ring (22) are non-metallic.

9. The valve according to one of claims 1 to 8, wherein at least one on the first plug seal ring (18, 18'), the second plug seal ring (28") and the cover seal ring (22) are graphite rings.

10. The valve according to one of claims 1 to 9, wherein the metal seal ring is C shaped in cross-section.

11. The valve (1) according to one of claims 1 to 10, wherein
the cage (7) is generally shaped as a cylinder having a first opening (10) in a cylindrical side wall and a second opening (11) in an end of the cage to provide said flow path between the first port (4) and second port (5) of the valve via an inner part of the cage (7), and
a seat ring (12) is provided to the second opening (11) of the cage (7) to fluid tightly receive and an end (13) of the valve plug (8) which is opposite to an end of the valve plug to which the stem (7) is connected.

12. The valve according to one of claims 1 to 11, wherein the valve plug (8) is provided with at least one balancing opening (14) through the valve plug to provide pressure balancing between different interior parts of the cage (7) that are separated from each other by the valve plug (8).

13. A method for installing a sealing assembly to a valve, **characterized in that** the method comprises:
arranging a valve plug (8) into a valve cage (7) of a valve,
arranging a metal seal ring (15) to surround the valve plug (8),
arranging a first seal cover (16, 16', 16", 16‴) to surround the valve plug (8) on an inside of the metal seal ring (15) and to at least partially cover the metal seal ring (15),
arranging a first plug seal ring (18) between the first seal cover (16, 16', 16", 16‴) and an inner wall (17) of the valve cage (7), and
attaching a valve plug cover (21) to the valve plug (8).

14. The method according to claim 13, wherein before attaching the valve plug cover (21), the method comprises:
arranging a second seal cover (27) to surround the valve plug (8) and to cover the first plug seal ring (18), and
arranging a second plug seal (28") in a space between the second seal cover (27") and the inner wall (17) of the valve cage (7).

15. The method according to claim 13 or 14, wherein before attaching the valve plug cover (21), the method comprises:
arranging a cover seal (22) between the plug cover (21) and the valve plug (8).
